(19) **Europäisches Patentamt / European Patent Office / Office européen des brevets**

(11) **EP 3 381 813 B1**

(12) # FASCICULE DE BREVET EUROPEEN

(45) Date de publication et mention de la délivrance du brevet:
**05.05.2021   Bulletin 2021/18**

(51) Int Cl.:
**B64G 1/24** *(2006.01)*      **B64G 1/26** *(2006.01)*
**B64G 1/28** *(2006.01)*      **F02K 9/84** *(2006.01)*

(21) Numéro de dépôt: **18168546.2**

(22) Date de dépôt: **19.06.2015**

(54) **SATELLITE COMPORTANT DES MOYENS DE PROPULSION ELECTRIQUES PORTES PAR DES MOYENS DE DEPLACEMENT ET DES MOYENS DE PROPULSION ELECTRIQUES ADDITIONNELS D'ORIENTATION FIXE**

SATELLIT, DER ELEKTRISCHE ANTRIEBSMITTEL UMFASST, DIE VON BEWEGUNGSMITTELN UND ZUSÄTZLICHEN ELEKTRISCHEN ANTRIEBSMITTELN MIT FESTER AUSRICHTUNG GETRAGEN WERDEN

SATELLITE INCLUDING ELECTRIC PROPULSION MEANS SUPPORTED BY MOVING MEANS AND ADDITIONAL ELECTRIC PROPULSION MEANS WITH FIXED ORIENTATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **19.06.2014   FR 1455630**

(43) Date de publication de la demande:
**03.10.2018   Bulletin 2018/40**

(62) Numéro(s) de document de la (des) demande(s) initiale(s) en application de l'article 76 CBE:
**15732194.4 / 3 157 815**

(73) Titulaire: **Airbus Defence and Space SAS**
**31402 Toulouse Cedex 4 (FR)**

(72) Inventeur: **DOUBRERE, Patrick**
**31402 Toulouse Cedex 4 (FR)**

(74) Mandataire: **Plasseraud IP**
**66, rue de la Chaussée d'Antin**
**75440 Paris Cedex 09 (FR)**

(56) Documents cités:
**EP-A1- 2 666 723          EP-A2- 2 660 154**
**EP-A2- 2 727 844          WO-A2-92/09479**
**US-A1- 2014 061 386**

Printed by Jouve, 75001 PARIS (FR)

**Description**

## DOMAINE TECHNIQUE

La présente invention appartient au domaine du contrôle d'orbite et d'attitude des satellites. L'invention trouve une application particulièrement avantageuse, bien que nullement limitative, dans le cas de satellites de télécommunications en orbite géostationnaire (« Geostationary Orbit » ou GEO) équipés de moyens de propulsion électriques.

## ÉTAT DE LA TECHNIQUE

De manière connue, un satellite en orbite terrestre est soumis à de nombreuses perturbations. Ces perturbations tendent, d'une part, à déplacer le satellite par rapport à une position de consigne sur son orbite et, d'autre part, à modifier l'attitude dudit satellite par rapport à une attitude de consigne.

Afin de maintenir le satellite sensiblement dans la position de consigne et dans l'attitude de consigne, il est nécessaire d'effectuer un contrôle d'orbite et un contrôle d'attitude dudit satellite.

Le contrôle d'orbite consiste à limiter les variations des paramètres orbitaux généralement exprimés en termes d'inclinaison, de longitude et d'excentricité de l'orbite du satellite. Dans le cas d'un satellite en orbite GEO, tel qu'un satellite de télécommunications, le contrôle d'orbite revient à contrôler la position du satellite par rapport à la Terre, et est connu également sous le nom de maintien à poste du satellite (« station keeping » ou « S/K » dans la littérature anglo-saxonne).

Le contrôle d'orbite d'un satellite en orbite GEO est généralement réalisé au moyen de plusieurs manœuvres de contrôle d'orbite au cours desquelles des propulseurs du satellite sont activés. Le contrôle d'orbite du satellite est effectué en ajustant les forces de poussée formées par lesdits propulseurs au cours des différentes manœuvres de contrôle d'orbite, mais également en ajustant les durées d'activation desdits propulseurs. De manière conventionnelle, plusieurs manœuvres de contrôle d'orbite sont effectuées :

- les manœuvres Nord/Sud (N/S) permettent de contrôler l'inclinaison de l'orbite du satellite,
- les manœuvres Est-Ouest (E/O) permettent de contrôler la longitude de l'orbite du satellite.

L'excentricité est généralement contrôlée au cours des manœuvres E/O dans le cas de propulseurs chimiques, ou au cours des manœuvres N/S dans le cas de propulseurs électriques.

On peut définir un repère satellite centré sur un centre de masse dudit satellite et comportant trois axes X, Y et Z : l'axe X est parallèle à un vecteur vitesse du satellite, l'axe Z est dirigé vers la Terre et l'axe Y est orthogonal aux axes X et Z. Dans le repère satellite, les manœuvres N/S nécessitent d'avoir des forces de poussée suivant l'axe Y, tandis que les manœuvres E/O nécessitent d'avoir des forces de poussée suivant l'axe X du repère satellite.

Dans le cas général, les manœuvres N/S et les manœuvres E/O utilisent des propulseurs distincts, pouvant être de technologies différentes (par exemple électriques pour les manœuvres N/S et chimiques pour les manœuvres E/O). Les propulseurs utilisés pour les manœuvres N/S peuvent être montés sur des moyens de déplacement. Des tels moyens de déplacement sont mis en œuvre pour maintenir, dans le plan YZ, les directions de poussée des propulseurs alignées avec le centre de masse du satellite (qui peut varier au cours du temps en fonction de la quantité d'ergols dans les réservoirs, de la position / orientation des équipements de la charge utile, etc.), afin d'éviter de former des moments susceptibles de modifier l'attitude du satellite.

Les dates des manœuvres de contrôle d'orbite (c'est-à-dire les dates d'activation des propulseurs), les durées desdites manœuvres de contrôle d'orbite (c'est-à-dire les durées d'activation des propulseurs), ainsi que les forces de poussées desdites manœuvres de contrôle d'orbite constituent un plan de manœuvre du contrôle d'orbite. Ce plan de manœuvre est déterminé de sorte à minimiser la consommation des propulseurs tout en maintenant les paramètres orbitaux dans des plages prédéfinies.

Le contrôle d'attitude consiste à contrôler l'orientation du satellite, en particulier par rapport à la Terre. Lorsque le satellite est à poste en orbite, les perturbations appliquent des moments (« torques » dans la littérature anglo-saxonne) qui tendent à faire tourner ledit satellite autour de son centre de masse et donc à modifier l'attitude dudit satellite par rapport à l'attitude de consigne. Il est à noter que les manœuvres de contrôle d'orbite peuvent également appliquer des moments perturbateurs lorsque les forces de poussée ne sont pas parfaitement alignées avec le centre de masse du satellite.

Afin de maintenir le satellite dans l'attitude de consigne, celui-ci est généralement équipé d'un dispositif de stockage de moment cinétique (« angular momentum » dans la littérature anglo-saxonne). Le dispositif de stockage de moment cinétique comporte par exemple au moins trois roues de réaction, d'axes de rotation linéairement indépendants. En contrôlant la vitesse de rotation desdites roues de réaction, il est possible de créer des moments qui s'opposent aux moments perturbateurs.

Du fait de l'effet cumulatif des moments perturbateurs, les vitesses de rotation desdites roues de réaction, et donc le moment cinétique stocké, tendent à augmenter progressivement. Il est par conséquent nécessaire de désaturer régulièrement le dispositif de stockage de moment cinétique afin de limiter l'excursion en vitesse desdites roues de réaction. Par « désaturer », on entend appliquer des moments externes sur le satellite qui, lorsqu'ils sont repris par le dispositif de stockage de moment cinétique, permettent de diminuer la quantité de moment cinétique stocké. Une telle désaturation du dispositif de stockage de moment cinétique est connue sous le nom de « angular momentum unloading » dans la littérature anglo-saxonne.

La désaturation du dispositif de stockage de moment cinétique met généralement en œuvre des propulseurs dédiés, qui sont activés au cours de manœuvres dédiées de contrôle d'attitude.

On comprend donc que le contrôle d'orbite et le contrôle d'attitude, en particulier la désaturation d'un dispositif de stockage de moment cinétique d'un satellite mettent en œuvre de nombreux propulseurs différents et/ou de nombreuses manœuvres différentes. Du fait qu'il comporte de nombreux propulseurs différents, la complexité et le coût de fabrication du satellite sont augmentés. Du fait que de nombreuses manœuvres différentes doivent être effectuées, la consommation des propulseurs est augmentée, ce qui peut diminuer la durée de vie du satellite, surtout dans le cas de propulseurs chimiques. En outre l'augmentation du nombre de séquences ON/OFF des propulseurs a également un effet négatif sur leur durée de vie. Par ailleurs, la charge opérationnelle du segment sol est directement liée au nombre de manœuvres. Il est donc souhaitable de limiter leur nombre.

Le document EP 2660154 A2 décrit un exemple de satellite visant à limiter le nombre de propulseurs mis en œuvre lors du contrôle d'orbite.

## EXPOSÉ DE L'INVENTION

La présente invention a pour objectif de remédier à tout ou partie des limitations des solutions de l'art antérieur, notamment celles exposées ci-avant, en proposant une solution qui permette de limiter à la fois le nombre de propulseurs et le nombre de manœuvres nécessaires pour contrôler l'orbite du satellite et désaturer un dispositif de stockage de moment cinétique du satellite.

A cet effet, la présente invention concerne un satellite tel que défini par les revendications.

Les exemples de réalisation décrits qui ne sont pas couverts par les revendications sont à considérer comme des exemples de réalisation utiles à la compréhension de l'invention.

Un premier exemple de réalisation concerne un procédé de contrôle d'orbite d'un satellite en orbite terrestre, dans lequel l'orbite du satellite est contrôlée en commandant selon un plan de manœuvre des moyens de propulsion, comportant au moins un propulseur, et des moyens de déplacement desdits moyens de propulsion dans un repère satellite centré sur un centre de masse du satellite et comportant trois axes X, Y et Z, l'axe X étant parallèle à un vecteur vitesse du satellite, l'axe Z étant dirigé vers la Terre, et l'axe Y étant orthogonal aux axes X et Z. Les moyens de déplacement sont en outre adaptés à :

- modifier des angles entre une direction de poussée de chaque propulseur et les axes respectivement X, Y du repère satellite,
- déplacer chaque propulseur, à direction de poussée constante dans le repère satellite, de sorte à former un moment d'axe
  quelconque dans un plan orthogonal à ladite direction de poussée, le plan de manœuvre comporte au moins deux manœuvres de contrôle d'orbite, des forces de poussée des moyens de propulsion au cours desdites deux manœuvres de contrôle d'orbite sont de directions de poussée respectives non parallèles en repère inertiel, et lesdites forces de poussée desdites deux manœuvres de contrôle d'orbite sont déterminées de sorte à contrôler simultanément l'inclinaison et la longitude de l'orbite du satellite, tout en formant des moments adaptés à désaturer un dispositif de stockage de moment cinétique dudit satellite dans des plans respectifs non parallèles en repère inertiel, de sorte que lesdites deux manœuvres de contrôle d'orbite du plan de manœuvre permettent de désaturer ledit dispositif de stockage de moment cinétique suivant trois axes.

De manière générale, dans toute la présente demande, une force de poussée est définie par un vecteur de poussée et un point d'application de ladite force de poussée par rapport au centre de masse du satellite. Le vecteur de poussée est lui-même défini par une norme de poussée et par une direction de poussée de norme unitaire, qui correspond au vecteur de poussée normalisé par ladite norme de poussée.

Tel qu'indiqué ci-dessus, les moyens de déplacement permettent de modifier des angles entre la direction de poussée de chaque propulseur et les axes respectivement X, Y du repère satellite. Par conséquent, il est possible avec de tels moyens de déplacement de former une force de poussée de direction de poussée adaptée à contrôler simultanément l'inclinaison de l'orbite du satellite (composante suivant l'axe Y) et la longitude de l'orbite du satellite (composante suivant l'axe X).

Les moyens de déplacement permettent en outre de déplacer chaque propulseur, à direction de poussée constante dans le repère satellite (c'est-à-dire que seul le point d'application de la force de poussée est déplacé), de sorte à former un moment d'axe quelconque dans un plan orthogonal à ladite direction de poussée. Par conséquent, il est possible avec de tels moyens de déplacement de former une force de poussée adaptée non seulement à contrôler l'inclinaison et la longitude de l'orbite du satellite, mais également à former un moment de désaturation du dispositif de stockage de moment cinétique compris dans le plan orthogonal à ladite direction de poussée.

En effet, pour une direction de poussée donnée, les axes possibles du moment formé en déplaçant le point d'application de la force de poussée se trouvent tous dans le plan orthogonal à ladite direction de poussée. Par conséquent, pour une direction de poussée donnée, la désaturation du dispositif de stockage de moment cinétique n'est possible que dans un espace vectoriel de dimension deux. Du fait que le plan de manœuvre comporte au moins deux manœuvres de contrôle d'orbite pour lesquelles les forces de poussée sont de directions de poussée respectives non parallèles en repère inertiel, les plans orthogonaux à ces directions de poussée ne sont également pas parallèles de sorte que, en moyenne sur ces deux manœuvres de contrôle d'orbite, la désaturation du dispositif de stockage de moment cinétique est possible dans un espace vectoriel de dimension trois.

Un second exemple de réalisation concerne un produit programme d'ordinateur caractérisé en ce qu'il comporte un ensemble d'instructions de code de programme qui, lorsqu'elles sont exécutées par un processeur, configurent ledit processeur pour mettre en œuvre un procédé de contrôle d'orbite d'un satellite selon le premier exemple de réalisation.

Un troisième exemple de réalisation concerne un satellite destiné à être mis à poste en orbite terrestre, comportant des moyens de propulsion, comportant au moins un propulseur, et des moyens de déplacement desdits moyens de propulsion dans un repère satellite centré sur un centre de masse dudit satellite et comportant trois axes X, Y et Z tels que, dans le satellite à poste en orbite terrestre, l'axe X est parallèle à un vecteur vitesse du satellite, l'axe Z est dirigé vers la Terre, et l'axe Y est orthogonal aux axes X et Z. En outre, les moyens de déplacement sont adaptés à :

- modifier des angles entre une direction de poussée de chaque propulseur et les axes respectivement X, Y du repère satellite
- déplacer chaque propulseur, à direction de poussée constante dans le repère satellite, de sorte à former un moment d'axe quelconque dans un plan orthogonal à ladite direction de poussée.

Le satellite selon le troisième exemple de réalisation comporte en outre des moyens adaptés à commander les moyens de propulsion et les moyens de déplacement selon un plan de manœuvre comportant au moins deux manœuvres de contrôle d'orbite, des forces de poussée des moyens de propulsion au cours desdites deux manœuvres de contrôle d'orbite étant de directions de poussée respectives non parallèles en repère inertiel, lesdites forces de poussée desdites deux manœuvres de contrôle d'orbite étant déterminées de sorte à contrôler simultanément l'inclinaison et la longitude de l'orbite du satellite tout en formant des moments adaptés à désaturer un dispositif de stockage de moment cinétique dudit satellite dans des plans respectifs non parallèles en repère inertiel, de sorte que lesdites deux manœuvres de contrôle d'orbite du plan de manœuvre permettent de désaturer ledit dispositif de stockage de moment cinétique suivant trois axes.

Un quatrième exemple de réalisation concerne un système de contrôle d'orbite d'un satellite selon le troisième exemple de réalisation, comportant des moyens configurés pour déterminer le plan de manœuvre de sorte à assurer une capacité minimale prédéterminée de désaturation suivant trois axes sur l'ensemble desdites deux manœuvres de contrôle d'orbite dudit plan de manœuvre

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un système de contrôle d'orbite d'un satellite en orbite autour de la Terre,
- Figure 2 : une représentation schématique d'un mode particulier de réalisation d'un satellite selon l'invention,
- Figure 3 : une représentation schématique d'un exemple de réalisation d'un satellite,
- Figure 4 : une représentation schématique d'une variante de réalisation du satellite de la figure 3,
- Figure 5 : un diagramme représentant les principales étapes d'un procédé de contrôle d'orbite d'un satellite.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

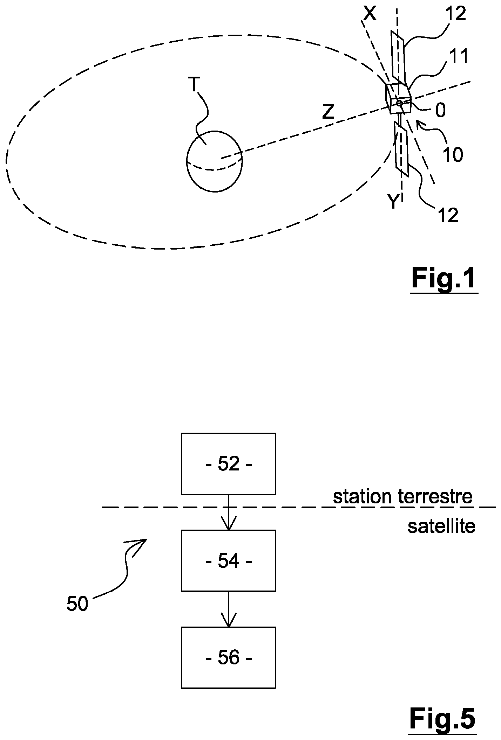

La figure 1 représente schématiquement un système de contrôle d'orbite d'un satellite 10. Dans la suite de la description, on se place de manière non limitative dans le cas d'un satellite 10 en orbite GEO. Rien n'exclut cependant, suivant d'autres exemples, de considérer d'autres types d'engins spatiaux (navette spatiale, station orbitale, etc.), et/ou d'autres orbites terrestres, par exemple des orbites géosynchrones, des orbites moyennes (« Medium Earth Orbit » ou MEO), des orbites basses (« Low Earth Orbit » ou LEO), etc.

Pour les besoins de la description, on associe au satellite 10 un repère satellite centré sur un centre de masse O du satellite 10 et comportant trois axes X, Y, Z. Plus particulièrement, l'axe X est parallèle à un vecteur vitesse du satellite 10 en repère inertiel, l'axe Z est dirigé vers le centre de la Terre T, et l'axe Y est orthogonal aux axes X et Z. On associe à chacun des axes X, Y et Z du repère satellite des vecteurs unitaires respectivement ux, uy et uz. Le vecteur unitaire ux correspond au vecteur vitesse normalisé par la norme dudit vecteur vitesse, le vecteur unitaire uz est orienté du centre de masse O du satellite 10 vers le centre de la Terre T, et le vecteur unitaire uy est orienté de telle sorte que l'ensemble (ux, uy, uz) constitue une base orthonormée directe du repère satellite.

Tel qu'illustré par la figure 1, le satellite 10 comporte par exemple un corps 11, et deux générateurs solaires 12 de part et d'autre du corps 11. Les deux générateurs solaires 12 sont par exemple montés mobiles en rotation par rapport au corps 11 du satellite 10, autour d'un même axe de rotation.

Dans la suite de la description, on se place de manière non limitative dans le cas où le corps 11 du satellite 10 est sensiblement en forme de parallélépipède rectangle. Le corps 11 comporte ainsi six faces deux à deux parallèles, et les deux générateurs solaires 12 sont agencés respectivement sur deux faces opposées dudit corps 11, l'axe de rotation desdits deux générateurs solaires 12 étant sensiblement orthogonal auxdites deux faces opposées du corps 11 du satellite 10.

Dans la suite de la description, on se place de manière non limitative dans le cas où l'attitude du satellite 10 est contrôlée, pour les besoins de la mission dudit satellite 10, de sorte à être placé dans une attitude de consigne, dite « attitude de mission », dans laquelle :

- une face du corps 11 du satellite 10, désignée par «face +Z », portant par exemple un instrument d'une charge utile dudit satellite 10, est dirigée vers la Terre et est sensiblement orthogonale à l'axe Z ; la face opposée à la face +Z, agencée alors du côté opposé à la Terre, est désignée par « face -Z » ;
- les deux faces opposées du corps 11 du satellite 10 sur lesquelles sont agencés les deux générateurs solaires 12, désignées par respectivement « face +Y » (par rapport au centre de masse O : du côté pointé par le vecteur unitaire uy) et « face -Y », sont sensiblement orthogonales à l'axe Y ;
- les deux dernières faces opposées du corps 11 du satellite 10, désignées par respectivement « face +X » (par rapport au centre de masse O : du côté pointé par le vecteur unitaire ux) et « face - X », sont sensiblement orthogonales à l'axe X.

Le satellite 10 comporte également un ensemble d'actionneurs adaptés à contrôler l'orbite et l'attitude dudit satellite 10, ainsi qu'un dispositif de commande (non représenté sur les figures) desdits actionneurs.

Pour les besoins du contrôle d'attitude, le satellite 10 comporte en particulier un dispositif de stockage de moment cinétique (non représenté sur les figures) adapté à stocker un moment cinétique d'axe quelconque, c'est-à-dire ayant une capacité de stockage de moment cinétique suivant trois axes linéairement indépendants. Le dispositif de stockage de moment cinétique comporte un ensemble d'actionneurs inertiels tels que des roues de réaction et/ou des actionneurs gyroscopiques. Par exemple, le dispositif de stockage de moment cinétique comporte au moins trois roues de réaction d'axes de rotation respectifs linéairement indépendants.

Tel qu'indiqué précédemment, le contrôle d'orbite consiste à contrôler au moins un paramètre orbital parmi l'inclinaison, la longitude et l'excentricité de l'orbite du satellite 10. Dans le cas d'un satellite 10 en orbite GEO, il est connu que les besoins en termes de contrôle d'orbite, par exemple exprimés en termes de variation de vitesse requise par an (m/s/an), sont principalement imposés par le contrôle de l'inclinaison de l'orbite du satellite 10 (contrôle N/S). L'ordre de grandeur de la variation de vitesse requise par an pour le contrôle N/S, suivant l'axe Y, est ainsi de 50 m/s/an, tandis qu'il est de 2-4 m/s/an pour le contrôle de la longitude de l'orbite (contrôle E/O), suivant l'axe X.

Pour les besoins du contrôle d'orbite, le satellite 10 comporte en particulier des moyens de propulsion, comportant au moins un propulseur, et des moyens de déplacement desdits moyens de propulsion dans le repère satellite. Plus particulièrement, les moyens de déplacement sont adaptés à :

- modifier des angles entre une direction de poussée de chaque propulseur et les axes respectivement X, Y du repère satellite,
- déplacer chaque propulseur, à direction de poussée constante dans le repère satellite, de sorte à former un moment d'axe quelconque dans un plan orthogonal à ladite direction de poussée (y compris un moment nul en alignant la direction de poussée avec le centre de masse O du satellite 10).

Le contrôle d'orbite du satellite 10 est réalisé, au niveau du dispositif de commande, en commandant les moyens de propulsion et les moyens de déplacement selon un plan de manœuvre comportant des manœuvres de contrôle d'orbite au cours desquelles les moyens de propulsion sont activés.

Avec de tels moyens de déplacement, on comprend qu'il est possible, au cours d'une même manœuvre de contrôle d'orbite et avec un même propulseur, de contrôler la direction de poussée dudit propulseur de sorte à contrôler simultanément l'inclinaison (en ajustant la composante de la direction de poussée suivant l'axe Y) et la longitude (en ajustant la composante de la direction de poussée suivant l'axe X) de l'orbite. Il est également possible, toujours au cours de la même manœuvre de contrôle d'orbite et avec le même propulseur, de former si nécessaire un moment de désaturation du dispositif de stockage de moment cinétique suivant un axe quelconque compris dans le plan orthogonal à ladite direction de poussée, en déplaçant le point d'application de la force de poussée par rapport au centre de masse du satellite 10.

Afin de pouvoir désaturer le dispositif de stockage de moment cinétique quelle que soit la direction du moment cinétique stocké, le plan de manœuvre comporte avantageusement au moins deux manœuvres de contrôle d'orbite dont les forces de poussée respectives des moyens de propulsion sont non parallèles en repère inertiel. Ainsi, au cours desdites deux manœuvres de contrôle d'orbite, les plans dans lesquels il est possible de former un moment de désaturation ne sont pas parallèles de sorte que, sur l'ensemble desdites deux manœuvres de contrôle d'orbite, l'espace vectoriel dans lequel il est possible de former un moment de désaturation est de dimension trois.

Les forces de poussée du plan de manœuvre sont donc déterminées, en fonction de besoins prédéterminés de contrôle de l'inclinaison et de la longitude de l'orbite du satellite 10, et en fonction d'un besoin prédéterminé de désaturation du dispositif de stockage de moment cinétique dudit satellite 10, de sorte à contrôler simultanément l'inclinaison et la longitude de l'orbite tout en désaturant le dispositif de stockage de moment cinétique dudit satellite 10.

Dans l'art antérieur, les manœuvres E/O étaient effectuées à une fréquence inférieure à celle des manœuvres N/S plasmiques. Selon l'invention, le contrôle E/O est effectué simultanément au contrôle N/S. Par conséquent, la fréquence du contrôle E/O est plus importante que la fréquence des manœuvres E/O de l'art antérieur, de sorte qu'il est possible par exemple de réduire l'excursion en longitude par rapport à celle de l'art antérieur.

En outre, le nombre de manœuvres de contrôle d'orbite est réduit par rapport à l'art antérieur dans la mesure où l'inclinaison et la longitude de l'orbite du satellite 10 sont contrôlées simultanément. Le nombre d'activations des moyens de propulsion est donc également réduit et la consommation, en particulier dans le cas de moyens de propulsion chimiques, peut être réduite.

Enfin, le nombre total de manœuvres de contrôle d'orbite et de désaturation du dispositif de stockage de moment cinétique est également réduit par rapport à l'art antérieur dans la mesure où il n'est plus nécessaire d'avoir des manœuvres dédiées de désaturation. En outre, les mêmes moyens de propulsion sont mis en œuvre à la fois pour contrôler l'orbite du satellite 10 et pour désaturer le dispositif de stockage de moment cinétique, de sorte qu'il est possible de réduire le nombre de propulseurs embarqués dans le satellite 10. Rien n'exclut cependant de prévoir des moyens de propulsion additionnels dédiés à la désaturation du dispositif de stockage de moment cinétique. Le cas échéant, il sera possible de réduire la capacité desdits moyens de propulsion additionnels et/ou du dispositif de stockage de moment cinétique, dans la mesure où les moyens de propulsion mis en œuvre pour contrôler l'orbite du satellite 10 contribuent également à désaturer régulièrement ledit dispositif de stockage de moment cinétique.

Il est également possible, toujours au cours de la même manœuvre de contrôle d'orbite, de contrôler en outre l'excentricité de l'orbite, en ajustant par exemple les dates et/ou les durées desdites au moins deux manœuvres de contrôle d'orbite du plan de manœuvre en fonction d'un besoin prédéterminé de contrôle de l'excentricité de l'orbite. Tous les paramètres orbitaux sont donc contrôlés simultanément, et ce en désaturant en outre le dispositif de stockage de moment cinétique.

De préférence, dans le cas d'un satellite en orbite GEO (ou de manière plus générale : en orbite géosynchrone), le plan de manœuvre comporte en tout deux manœuvres de contrôle d'orbite par période orbitale (approximativement 24 heures). Pour les besoins du contrôle de l'inclinaison de l'orbite, l'espacement temporel nominal des manœuvres de contrôle d'orbite est d'environ 12 heures. Toutefois, les directions de poussée optimales pour corriger les perturbations prépondérantes (inclinaison) étant orientées selon la normale orbitale, les forces de poussée déterminées uniquement pour le contrôle des perturbations auraient des directions de poussée sensiblement parallèles en repère inertiel. Par conséquent, on impose un désalignement entre lesdites directions de poussée et/ou on impose un décalage temporel entre les manœuvres de contrôle d'orbite par rapport à l'espacement temporel de l'art antérieur.

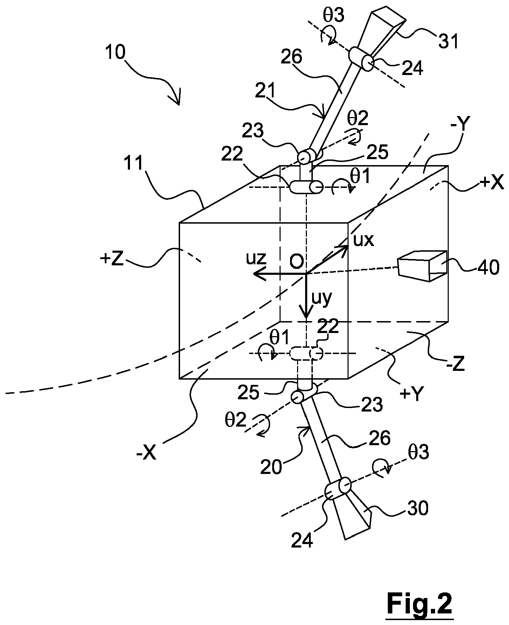

La figure 2 représente un mode particulier de réalisation d'un satellite 10 comportant des moyens de déplacement adaptés à contrôler simultanément l'inclinaison et la longitude de l'orbite du satellite 10, tout en désaturant au moins partiellement le dispositif de stockage de moment cinétique. A des fins de clarté de la figure 2, les générateurs solaires 12 du satellite ne sont pas représentés.

Dans l'exemple illustré par la figure 2, les moyens de déplacement comportent deux bras articulés 20, 21, chaque bras articulé 20, 21 portant un propulseur 30, 31. Dans la suite de la description, on se place de manière non limitative dans le cas où les propulseurs 30, 31 sont des propulseurs électriques (électrothermique, électrostatique, plasma, etc.). Rien n'exclut cependant, suivant d'autres exemples, que l'un ou les deux propulseurs 30, 31 soient des propulseurs chimiques (gaz froid, ergols liquides, etc.).

Dans l'exemple non limitatif illustré par la figure 2, les bras articulés 20, 21 sont agencés sur respectivement la face +Y et la face -Y du corps 11 du satellite 10. Les bras articulés 20, 21 sont par exemple mis en œuvre respectivement pour le contrôle Sud et le contrôle Nord de l'inclinaison de l'orbite du satellite 10, en activant alternativement soit le propulseur 30 soit le propulseur 31.

De préférence, le bras articulé 20 est fixé à ladite face +Y en un point fixe qui correspond sensiblement à la projection orthogonale d'un centre de masse théorique du satellite 10 sur ladite face +Y. Le centre de masse théorique (considéré confondu avec le centre masse O réel sur la figure 2) correspond par exemple à une estimation avant lancement du centre de masse du satellite 10 à poste sur l'orbite GEO. En d'autres termes, le point de fixation du bras articulé est tel que le moment appliqué sur le satellite 10 est sensiblement nul lorsque le bras articulé 20 est déployé sensiblement orthogonalement à la face +Y en imposant une direction de poussée du propulseur 30 sensiblement orthogonale à ladite face +Y. Si le satellite 10 est en outre dans l'attitude de mission, alors ladite direction de poussée est orthogonale au plan d'orbite confondu avec le plan XZ, et ne permet donc de contrôler que l'inclinaison de l'orbite.

De manière analogue, le bras articulé 21 est fixé à ladite face -Y en un point fixe qui correspond sensiblement à la projection orthogonale du centre de masse théorique du satellite 10 sur ladite face -Y. Ainsi, le moment appliqué sur le satellite 10 est sensiblement nul lorsque le bras articulé 21 est déployé sensiblement orthogonalement à la face -Y en imposant une direction de poussée du propulseur 31 sensiblement orthogonale à ladite face -Y. Si le satellite 10 est en outre dans l'attitude de mission, alors ladite direction de poussée est orthogonale au plan d'orbite confondu avec le plan XZ, et ne permet donc de contrôler que l'inclinaison de l'orbite.

Dans la suite de la description, on désigne par « position de contrôle N/S » la position du bras articulé 20 (respectivement bras articulé 21) dans laquelle ledit bras articulé est déployé sensiblement orthogonalement à la face +Y (respectivement face -Y) en imposant une direction de poussée du propulseur 30 (respectivement propulseur 31) sensiblement orthogonale à ladite face +Y (respectivement face -Y), de sorte que la force de poussée dudit propulseur 30 (respectivement propulseur 31) est sensiblement alignée avec le centre de masse théorique du satellite 10.

Dans l'exemple illustré par la figure 2, chaque bras articulé 20, 21 comporte trois articulations 22, 23, 24, chaque articulation comportant au moins un degré de liberté en rotation autour d'un axe de rotation. Les articulations 22 et 23 sont reliées entre elles et séparées par une liaison 25, tandis que les articulations 23 et 24 sont reliées entre elles et séparées par une liaison 26. En outre, pour chaque bras articulé 20, 21, les axes de rotation respectifs d'articulations 22, 23, 24 adjacentes ne sont pas parallèles pour chacune des deux paires d'articulations adjacentes.

Ainsi, chaque bras articulé 20, 21 offre trois degrés de liberté pour modifier, par rapport à la position de contrôle N/S, la direction de poussée et le point d'application de la force de poussée du propulseur 30, 31. Par exemple, un premier degré de liberté peut être utilisé pour contrôler la composante de la direction de poussée suivant l'axe X (contrôle E/O), et les deux autres degrés de liberté peuvent être utilisés pour contrôler la position du point d'application de la force de poussée par rapport au centre de masse O du satellite 10 (désaturation du dispositif de stockage de moment cinétique).

De préférence, et tel qu'illustré dans l'exemple de la figure 2, l'axe de rotation de l'articulation 22 de chaque bras articulé 20, 21 est, lorsque le satellite 10 est dans l'attitude de mission, sensiblement parallèle à l'axe Z. L'axe de rotation de l'articulation 23 de chaque bras articulé 20, 21 est lui sensiblement orthogonal à la fois à la liaison 25 et à l'axe de rotation de l'articulation 22. L'axe de rotation de l'articulation 24 de chaque bras articulé 20, 21 est lui sensiblement orthogonal à la fois à la liaison 26 et à l'axe de rotation de l'articulation 23.

Pour contrôler la direction de poussée et le point d'application de la force de poussée, le dispositif de commande contrôle les angles de rotation des articulations 22, 23, 24, désignés respectivement par $\theta 1$, $\theta 2$ et $\theta 3$. Les articulations 22, 23, 24 sont par exemple telles que, lorsque le satellite 10 est à poste sur l'orbite GEO, chacun des angles de rotation $\theta 1$, $\theta 2$ et $\theta 3$ de chaque bras articulé 20, 21 peut prendre une valeur quelconque dans une plage de valeurs [-30°, 30°] autour de la position de contrôle N/S dudit bras articulé.

Selon l'invention, et tel qu'illustré par la figure 2, le satellite 10 comporte des moyens de propulsion additionnels, d'orientation fixe par rapport audit satellite 10. Le satellite 10 comporte un propulseur 40 électrique fixé à la face -Z du corps 11 du satellite 10, d'orientation fixe telle que la direction de poussée dudit propulseur 40 est sensiblement orthogonale à ladite face -Z. De préférence, le point de fixation du propulseur 40 à la face -Z correspond sensiblement à la projection orthogonale du centre de masse théorique du satellite 10 sur ladite face -Z. Ainsi, le moment appliqué sur le satellite 10 par ledit propulseur 40 est sensiblement nul tant que le centre de masse O réel du satellite 10 est proche du centre de masse théorique. Il est à noter que le satellite 10 peut comporter, suivant d'autres exemples, plusieurs propulseurs 40 d'orientation fixe par rapport au satellite 10.

Le propulseur 40 est mis en œuvre pour contrôler l'excentricité de l'orbite. Il peut être activé simultanément aux propulseurs 30, 31 portés par les bras articulés 20, 21, et/ou au cours de manœuvres de contrôle d'excentricité dédiées, distinctes des manœuvres de contrôle N/S et E/O de l'orbite.

En complément ou en alternative au propulseur 40 d'orientation fixe par rapport au satellite 10, l'un au moins des bras articulés 20, 21 peut comporter, dans des modes particuliers de réalisation, une articulation additionnelle (non représentée sur les figures) comportant au moins un degré de liberté en rotation autour d'un axe de rotation. Cette articulation additionnelle est par exemple reliée à l'articulation 24 par une liaison additionnelle, et l'axe de rotation de ladite articulation additionnelle est de préférence orthogonal à l'axe de rotation de l'articulation 24 et à ladite liaison additionnelle. Chaque bras articulé 20, 21 comportant une telle articulation additionnelle comporte alors un degré de liberté supplémentaire, qui peut par exemple être utilisé par le dispositif de commande pour contrôler tous les paramètres orbitaux, y compris l'excentricité, simultanément au manœuvres de contrôle N/S et E/O de l'orbite du satellite 10.

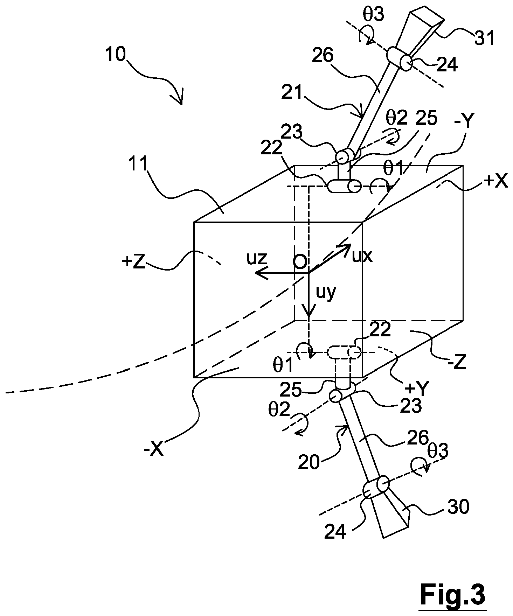

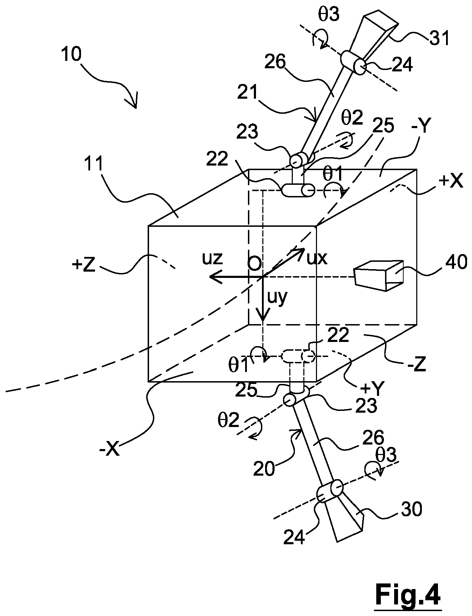

La figure 3 représente un exemple d'un satellite 10 qui comporte les mêmes moyens de déplacement (bras articulés 20 et 21) et les mêmes moyens de propulsion (propulseurs 30 et 31) portés lesdits moyens de déplacement que le satellite 10 illustré par la figure 2. Tel qu'illustré par la figure 3, le bras articulé 20 est avantageusement fixé à la face +Y en un point fixe qui est décalé, suivant l'axe Z, par rapport à la projection orthogonale du centre de masse théorique du satellite 10 sur ladite face +Y. De manière analogue, le bras articulé 21 est avantageusement fixé à la face -Y en un point fixe qui est décalé, suivant l'axe Z, par rapport à la projection orthogonale du centre de masse théorique du satellite 10 sur ladite face -Y. Dans l'exemple illustré par la figure 3, la position de contrôle N/S du bras articulé 20 (respectivement bras articulé 21) correspond à la position dans laquelle la liaison 25 est orientée sensiblement orthogonalement à la face +Y (respectivement face -Y) et la liaison 26 est orientée sensiblement en direction du centre de masse théorique du satellite 10, en imposant une force de poussée du propulseur 30 (respectivement propulseur 31) sensiblement alignée avec ledit centre de masse théorique du satellite 10. Une telle configuration des bras articulés 20, 21, par rapport à celle illustrée sur la figure 2, permet de faciliter le contrôle de l'excentricité de l'orbite du satellite 10, dans la mesure où la force de poussée du propulseur 30 (respectivement propulseur 31), dans la position de contrôle N/S, comporte une composante non nulle suivant l'axe Z sans former de moment. Il est donc possible, avec les seuls bras articulés 20, 21 et les seuls propulseurs 30, 31 de contrôler tous les paramètres orbitaux, y compris l'excentricité de l'orbite du satellite 10, en ajustant par exemple en outre les durées et/ou les dates des manœuvres de contrôle d'orbite du plan de manœuvre. Le satellite 10 peut donc, comme c'est le cas dans l'exemple non limitatif illustré par la figure 3, être dépourvu de propulseur 40 d'orientation fixe. Rien n'exclut cependant, tel qu'illustré par la figure 4, d'équiper néanmoins le satellite 10 de la figure 3 d'un propulseur 40 d'orientation fixe, à des fins par exemple de redondance pour pallier à une défaillance d'un des propulseurs 30, 31.

Dans les exemples illustrés par les figures 2, 3 et 4, les moyens de déplacement, c'est-à-dire les bras articulés 20, 21, sont agencés de façon symétrique par rapport au plan XZ formé par les axes X et Z du repère satellite. En particulier, dans ces exemples, les points de fixation des bras articulés 20, 21 sont agencés sensiblement sur un même axe parallèle à l'axe Y, de sorte que les coordonnées suivant les axes X et Z desdits points de fixation desdits bras articulés 20, 21, dans un repère satellite centré sur le centre de masse théorique, sont toutes deux identiques.

Dans des variantes alternatives préférées de réalisation, non illustrées par des figures, les bras articulés 20, 21, sont agencés de façon non symétrique par rapport au plan XZ. En particulier, les points de fixation des bras articulés 20, 21 étant agencés de part et d'autre du plan XZ en considérant le repère satellite centré sur le centre de masse O, par exemple agencés respectivement sur les faces +Y et -Y, les coordonnées suivant les axes X et Z desdits points de fixation desdits bras articulés 20, 21, dans ledit repère satellite centré sur le centre de masse O, ne sont de préférence pas toutes deux identiques. En d'autres termes, les points de fixation des bras articulés 20, 21 se projettent orthogonalement sur le plan XZ en des points respectifs différents. De telles dispositions permettent de faciliter la désaturation du dispositif de stockage de moment cinétique du satellite 10.

Tel que discuté ci-dessus, les moyens de déplacement comportent, dans les exemples illustrés par les figures 2, 3 et 4, deux bras articulés 20, 21 comportant chacun au moins trois articulations 22, 23, 24.

Toutefois, d'autres modes de réalisation des moyens de déplacement sont possibles, sans que l'invention en soit modifiée dans son principe. En particulier, rien n'exclut, suivant d'autres modes de réalisation, d'avoir des bras articulés comportant deux articulations comportant chacune au moins un degré de liberté en rotation autour d'un axe de rotation, les axes de rotation desdites deux articulations n'étant pas parallèles. Dans un tel cas, chaque bras articulé comporte deux degrés de liberté, et il est possible d'obtenir un degré de liberté supplémentaire en modifiant l'attitude du satellite 10 dans le repère satellite au cours des manœuvres de contrôle d'orbite. Le cas échéant, les moyens de déplacement comportent en outre un dispositif de contrôle d'attitude du satellite 10, qui peut être le dispositif de stockage de moment cinétique.

En outre, un satellite 10 selon l'invention a été décrit en référence aux figures 2, 3 et 4 en considérant que les moyens de déplacement comportent deux bras articulés 20, 21. Rien n'exclut, suivant d'autres exemples, d'avoir un nombre de bras articulés différent de deux. Notamment, les moyens de déplacement peuvent ne comporter qu'un seul bras articulé. Dans le cas d'un bras articulé unique, ledit bras articulé est par exemple fixé à la face -Z du corps du satellite 10, ou à l'une des deux faces +Y et -Y, tel qu'illustré par les figures 2, 3 et 4. Dans le cas d'un bras articulé unique fixé à la face -Y (ou à la face +Y) du corps 11 du satellite 10, il est par exemple possible, pour le contrôle Sud (respectivement le contrôle Nord) de l'orbite du satellite 10, de faire tourner le satellite 10, par rapport à l'attitude de mission, de 180° autour de l'axe Z du repère satellite.

Tel qu'indiqué précédemment, le dispositif de commande contrôle l'orbite du satellite 10 en fonction d'un plan de manœuvre comportant au moins deux manœuvres de contrôle d'orbite avec des forces de poussée de directions de poussée respectives non parallèles en repère inertiel. En outre, chacune desdites forces de poussée est déterminée de sorte à contrôler simultanément l'inclinaison et la longitude (et éventuellement l'excentricité) de l'orbite du satellite 10 ainsi qu'à former un moment adapté à désaturer le dispositif de stockage de moment cinétique dudit satellite 10.

Le dispositif de commande comporte par exemple au moins un processeur et au moins une mémoire électronique dans laquelle est mémorisé un produit programme d'ordinateur, sous la forme d'un ensemble d'instructions de code de programme à exécuter pour commander les moyens de déplacement et les moyens de propulsion du satellite 10 selon un tel plan de manœuvre. Dans une variante, le dispositif de commande comporte un ou des circuits logiques programmables, de type FPGA, PLD, etc., et/ou circuits intégrés spécialisés (ASIC) adaptés à mettre en œuvre tout ou partie desdites étapes de commande des moyens de déplacement et des moyens de propulsion selon un tel plan de manœuvre.

En d'autres termes, le dispositif de commande comporte un ensemble de moyens configurés de façon logicielle (produit programme d'ordinateur spécifique) et/ou matérielle (FPGA, PLD, ASIC, etc.) pour commander les moyens de déplacement et les moyens de propulsion du satellite 10 selon un tel plan de manœuvre.

Les principaux paramètres à ajuster du plan de manœuvre sont :

- les dates de début des différentes manœuvres de contrôle d'orbite du plan de manœuvre, c'est-à-dire les dates d'activation des moyens de propulsion,
- les durées des différentes manœuvres de contrôle d'orbite du plan de manœuvre, c'est-à-dire les durées d'activation des moyens de propulsion,
- les directions de poussée et les points d'application par rapport au centre de masse O du satellite 10 des forces de poussée respectives des différentes manœuvres de contrôle d'orbite.

Dans la suite de la description, on se place de manière non limitative dans le cas où la direction de poussée et le point d'application de chaque force de poussée du plan de manœuvre sont fixes par rapport en satellite 10 pendant toute la durée de la manœuvre de contrôle d'orbite correspondante. En d'autres termes, dans le cas des moyens de déplacement illustrés par les figures 2, 3 et 4, les valeurs des angles $\theta_1$, $\theta_2$ et $\theta_3$ des articulations 22, 23, 24 des bras articulés 20, 21 ne sont pas modifiées au cours d'une même manœuvre de contrôle d'orbite. Rien n'exclut cependant, suivant d'autres exemples, de faire varier lesdites valeurs des angles $\theta_1$, $\theta_2$ et $\theta_3$, afin d'augmenter le nombre de degrés de liberté du système de contrôle d'orbite.

Il est également possible d'ajuster d'autres paramètres tels que les durées respectives des différentes manœuvres de contrôle d'orbite du plan de manœuvre et/ou les normes de poussée des forces de poussée respectives desdites différentes manœuvres de contrôle d'orbite (dans le cas de moyens de propulsion dont la norme de poussée peut être contrôlée).

On désigne par F1 la force de poussée des moyens de propulsion au cours de la première des deux manœuvres de contrôle d'orbite, qui débute à une date T1, et par F2 la force de poussée des moyens de propulsion au cours de la seconde des deux manœuvres de contrôle d'orbite, qui débute à une date T2. Les forces de poussée F1 et F2 s'expriment dans le repère satellite selon les expressions suivantes :

$$F1 = F1x \cdot ux(T1) + F1y \cdot uy(T1) + F1z \cdot uz(T1)$$

$$F2 = F2x \cdot ux(T2) + F2y \cdot uy(T2) + F2z \cdot uz(T2)$$

expression dans laquelle :

- (F1x, F1y, F1z) sont les composantes de la force de poussée F1 dans le repère satellite à la date T1, dont les vecteurs unitaires sont (ux(T1), uy(T1), uz(T1)),
- (F2x, F2y, F2z) sont les composantes de la force de poussée F2 dans le repère satellite à la date T2, dont les vecteurs unitaires sont (ux(T2), uy(T2), uz(T2)).

Si l'on se place dans le cas d'un satellite 10 tel qu'illustré par la figure 3 dans lequel le contrôle d'excentricité est effectué au moyen des propulseurs 30, 31 portés par les bras articulés 20, 21, alors le système d'équations à résoudre comporte neuf équations, relatives aux paramètres suivants :

- ΔVx(T1) et ΔVx(T2), des paramètres scalaires qui correspondent aux besoins en termes de variation de vitesse requise suivant l'axe X (contrôle E/O), aux cours de la première manœuvre de contrôle d'orbite et de la seconde manœuvre du plan de manœuvre,
- ΔVy(T1) et ΔVy(T2), des paramètres scalaires qui correspondent aux besoins en termes de variation de vitesse requise suivant l'axe Y (contrôle N/S), aux cours de la première manœuvre de contrôle d'orbite et de la seconde manœuvre du plan de manœuvre,
- ΔVz(T1) et ΔVz(T2), des paramètres scalaires qui correspondent aux besoins en termes de variation de vitesse requise suivant l'axe Z (contrôle excentricité), aux cours de la première manœuvre de contrôle d'orbite et de la seconde manœuvre du plan de manœuvre,
- ΔH, un vecteur de trois paramètres scalaires correspondant aux composantes du moment cinétique à déstocker du dispositif de stockage de moment cinétique à l'issue des deux manœuvres de contrôle d'orbite, exprimé en repère inertiel.

En ajustant les durées et les dates des deux manœuvres de contrôle d'orbite et les valeurs des angles θ1 (T1), θ2(T1), θ3(T1), θ1(T2), θ2(T2) et θ3(T2) des articulations 22, 23, 24 des bras articulés 20, 21 au cours desdites deux manœuvres de contrôle d'orbite, on dispose alors d'un nombre suffisant de degrés de liberté pour résoudre le système d'équations susmentionné.

Si l'on se place dans le cas d'un satellite 10 dans lequel le contrôle d'excentricité est effectué au moyen d'un propulseur 40 d'orientation fixe par rapport au satellite 10, et dans le cas où ledit satellite 10 est dépourvu d'un des deux propulseurs 30 ou 31 (par conception ou du fait d'une défaillance temporaire ou définitive dudit propulseur ou du bras articulé le portant), alors la perte des degrés de liberté associés peut être compensée par une augmentation du nombre de manœuvres de contrôle d'orbite. De préférence, le plan de manœuvre est dans ce cas exécuté sur un horizon de temps plus long, afin de ne pas augmenter le nombre de manœuvres de contrôle d'orbite par période orbitale. Par exemple, il est possible de considérer un plan de manœuvre s'étalant sur plusieurs périodes orbitales, comportant de préférence au plus deux manœuvres de contrôle d'orbite par période orbitale. Les avantages sont que la charge opérationnelle au sol est inchangée après la panne, et qu'il n'y a pas d'augmentation du nombre des séquences ON/OFF des propulseurs (important vis-à-vis de la durée de vie, surtout après une panne). Le fonctionnement avec une fréquence de manœuvres plus importante, pour avoir une meilleure précision sur le contrôle d'orbite, est néanmoins également possible.

Le plan de manœuvre est en outre déterminé sous la contrainte suivante :

$$|EN1 + EN2 + RN \cdot \sin(\Delta T)| > \Gamma \qquad (1)$$

expression dans laquelle :

- Γ est une valeur scalaire strictement positive représentative d'une capacité minimale requise de désaturation trois axes du dispositif de stockage de moment cinétique du satellite 10,
- EN1 est égal au rapport F1x/F1y,
- EN2 est égal au rapport F2x/F2y,
- RN est égal au rapport F1z/F1y ou au rapport F2z/F2y,
- ΔT est égal à $2\pi \cdot$(T2 - T1 - Torb/2)/Torb, expression dans laquelle Torb est la période orbitale (approximativement 24 heures dans le cas d'une orbite géosynchrone).

ΔT est donc représentatif du décalage temporel par rapport à l'espacement temporel nominal (Torb/2, soit 12 heures dans le cas d'une orbite géosynchrone) entre les manœuvres de contrôle d'orbite. Si ΔT est non nul modulo π, alors les forces de poussée F1 et F2, déterminées uniquement pour le contrôle de l'inclinaison et de la longitude de l'orbite, seront non parallèles. En outre, les rapports EN1 et EN2 permettent d'imposer un désalignement entre lesdites forces de poussée F1 et F2 (en imposant que la somme EN1+EN2 n'est pas nulle). Enfin, l'expression globale (1) ci-dessus permet d'assurer que, si on impose à la fois un désalignement des forces de poussée F1 et F2 en repère satellite et un décalage temporel par rapport à l'espacement temporel nominal, ceux-ci ne s'annulent pas mutuellement en repère inertiel.

La valeur Γ est par exemple une valeur prédéfinie constante au cours du temps, ou une valeur qui peut être ajustée au cours du temps, en fonction par exemple du moment cinétique ΔH à déstocker. Notamment, on comprend que, si les forces de poussée F1 et F2 sont presque parallèles en repère inertiel, alors la capacité de désaturation est faible suivant la direction de poussée moyenne desdites forces de poussée F1 et F2. Plus la valeur Γ augmente, et plus la valeur absolue du produit scalaire des directions de poussée des forces de poussée F1 et F2 en repère inertiel tend à diminuer, de sorte que la capacité de désaturation trois axes du dispositif de stockage de moment cinétique augmente.

De manière plus générale, il est possible de considérer d'autres contraintes que celle donnée par l'expression (1) pour assurer une capacité minimale prédéterminée de désaturation trois axes du dispositif de stockage de moment cinétique du satellite 10 sur l'ensemble des deux manœuvres de contrôle d'orbite du plan de manœuvre. Suivant un autre exemple non limitatif, le plan de manœuvre est déterminé sous la contrainte suivante :

$$\|F1 \otimes F2\| > \Lambda \qquad (2)$$

expression dans laquelle :

- $\Lambda$ est une valeur scalaire strictement positive représentative d'une capacité minimale requise de désaturation suivant trois axes du dispositif de stockage de moment cinétique du satellite 10,
- $\|F1 \otimes F2\|$ correspond à la norme du produit vectoriel entre les forces de poussée F1 et F2 desdites deux manœuvres de contrôle d'orbite du plan de manœuvre.

En outre, il est également possible de considérer plusieurs contraintes lors de la détermination du plan de manœuvre. Par exemple, il est possible de déterminer un plan de manœuvre qui vérifie à la fois la contrainte donnée par l'expression (1) et la contrainte donnée par l'expression (2).

Le plan de manœuvre est par exemple déterminé directement par le dispositif de commande du satellite 10. Alternativement, le plan de manœuvre peut être déterminé par une station terrestre du système de contrôle d'orbite, et transmis au satellite 10 pour être mis en œuvre par le dispositif de commande. Le plan de manœuvre peut également, suivant d'autres exemples, être déterminé conjointement par le satellite 10 et la station terrestre.

La figure 5 représente schématiquement les principales étapes d'un procédé 50 de contrôle d'orbite dans lequel le plan de manœuvre est déterminé conjointement par une station terrestre et par le satellite 10. A cet effet, la station terrestre et le satellite 10 comportent des moyens de communication conventionnels respectifs qui leur permettent d'échanger des données.

Tel qu'illustré par la figure 5, le procédé 50 de contrôle d'orbite comporte tout d'abord une étape 52 de détermination d'un plan de manœuvre intermédiaire, comportant deux manœuvres de contrôle d'orbite dont les forces de poussée, de directions de poussée non parallèles, sont adaptées à contrôler simultanément plusieurs paramètres orbitaux (l'inclinaison, la longitude, et éventuellement l'excentricité) de l'orbite du satellite 10 sans modifier son moment cinétique.

Par exemple, au cours de l'étape 52 de détermination de plan de manœuvre intermédiaire, la station terrestre détermine les paramètres suivants :

- les dates T1 et T2 de début des manœuvres de contrôle d'orbite,
- les durées des deux manœuvres de contrôle d'orbite,
- des valeurs intermédiaires des angles $\theta1(T1)$, $\theta2(T1)$, $\theta3(T1)$, $\theta1(T2)$, $\theta2(T2)$ et $\theta3(T2)$ permettant d'avoir des forces de poussée qui contrôlent simultanément l'inclinaison et la longitude de l'orbite du satellite 10 sans former de moment.

Ces paramètres sont par exemple déterminés en fonction des paramètres scalaires $\Delta Vx(T1)$, $\Delta Vx(T2)$, $\Delta Vy(T1)$, $\Delta Vy(T2)$ (et éventuellement $\Delta Vz(T1)$ et $\Delta Vz(T2)$), reçus du satellite 10 ou déterminés directement par la station terrestre.

De préférence, le plan de manœuvre intermédiaire est déterminé par la station terrestre de sorte à assurer une capacité minimale de désaturation suivant trois axes, par exemple sous la contrainte $|EN1 + EN2 + RN \cdot \sin(\Delta T)| > \Gamma$. Si la valeur $\Gamma$ n'est pas constante au cours du temps, celle-ci est par exemple reçue du satellite 10, ou déterminée à partir de données reçues du satellite 10, telles que le moment cinétique $\Delta H$ à déstocker.

Le plan de manœuvre intermédiaire, une fois déterminé par la station terrestre, est transmis au satellite 10.

Le procédé 50 de contrôle d'orbite comporte ensuite une étape 54 au cours de laquelle le dispositif de commande détermine le plan de manœuvre à mettre en œuvre, c'est-à-dire le plan de manœuvre dont les forces de poussée sont en outre adaptées à former des moments de désaturation du dispositif de stockage de moment cinétique.

Plus particulièrement, cette étape 54 vise à déterminer de nouvelles valeurs des angles $\theta1(T1)$, $\theta2(T1)$, $\theta3(T1)$, $\theta1(T2)$, $\theta2(T2)$ et $\theta3(T2)$ permettant en outre de déstocker un moment cinétique $\Delta H$ du dispositif de stockage de moment cinétique à l'issue des deux manœuvres de contrôle d'orbite. Lesdites nouvelles valeurs des angles $\theta1(T1)$, $\theta2(T1)$, $\theta3(T1)$, $\theta1(T2)$, $\theta2(T2)$ et $\theta3(T2)$ sont déterminées en fonction du moment cinétique $\Delta H$ à déstocker et en fonction des valeurs intermédiaires desdits angles données par le plan de manœuvre intermédiaire, par exemple en linéarisant le système d'équations autour desdites valeurs intermédiaires. De préférence, les vecteurs de poussée des forces de poussée du plan de manœuvre déterminé au cours de l'étape 54 sont identiques à ceux du plan de manœuvre intermédiaire. En d'autres termes, seuls les points d'application desdites forces de poussée sont modifiés au cours de l'étape 54, afin d'obtenir des forces de poussée adaptées à former des moments de désaturation du dispositif de stockage de moment cinétique.

Le procédé 50 de contrôle d'orbite comporte ensuite une étape 56 au cours de laquelle le dispositif de commande pilote les moyens de déplacement et les moyens de propulsion conformément au plan de manœuvre déterminé au cours de l'étape 54.

Tel qu'indiqué précédemment, le plan de manœuvre à mettre en œuvre peut également être entièrement déterminé par la station terrestre. Le cas échéant, l'étape 54 de détermination du plan de manœuvre à mettre en œuvre, en fonction notamment du plan de manœuvre intermédiaire, est exécutée par la station terrestre. Rien n'exclut en outre, suivant d'autres exemples, de déterminer alors directement le plan de manœuvre à mettre en œuvre, sans passer par la détermination d'un plan de manœuvre intermédiaire.

La station terrestre comporte par exemple au moins un processeur et au moins une mémoire électronique dans laquelle est mémorisé un produit programme d'ordinateur, sous la forme d'un ensemble d'instructions de code de programme à exécuter pour mettre en œuvre les étapes associées du procédé 50 de contrôle d'orbite du satellite 10. Dans une variante, la station terrestre comporte un ou des circuits logiques programmables, de type FPGA, PLD, etc., et/ou circuits intégrés spécialisés (ASIC) adaptés à mettre en œuvre tout ou partie desdites étapes associées du procédé 50 de contrôle d'orbite.

En d'autres termes, la station terrestre comporte un ensemble de moyens configurés de façon logicielle (produit programme d'ordinateur spécifique) et/ou matérielle (FPGA, PLD, ASIC, etc.) pour mettre en œuvre les différentes étapes du procédé 50 de contrôle d'orbite qui sont exécutées par ladite station terrestre.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant un plan de manœuvre comportant deux manœuvres de contrôle d'orbite par période orbitale. En effet, l'invention permet, en uniquement deux manœuvres de contrôle d'orbite par période orbitale, de contrôler notamment l'inclinaison, la longitude et l'excentricité de l'orbite du satellite 10, tout en désaturant suivant trois axes le dispositif de stockage de moment cinétique dudit satellite 10. Rien n'exclut toutefois, suivant d'autres exemples, d'avoir un nombre différent de manœuvres de contrôle d'orbite par période orbitale, supérieur ou inférieur à deux. Par exemple, le plan de manœuvre peut comporter une manœuvre de contrôle d'orbite par période orbitale, et être défini le cas échéant sur une durée égale ou supérieure à deux périodes orbitales.

En outre, il est à noter que les moyens de déplacement des moyens de propulsion décrits ci-avant, en particulier les bras articulés 20, 21, peuvent également être mis en œuvre au cours de la mise à poste du satellite 10, par exemple lors d'une phase de transfert d'une orbite de transfert (« Geostationary Transfer Orbit » ou GTO) vers une orbite GEO. Par exemple, les bras articulés 20, 21 peuvent être commandés de sorte à ce que les propulseurs 30, 31 forment des forces de poussée de directions de poussée sensiblement orthogonales à la face -Z, pour déplacer le satellite 10 dans le sens du vecteur unitaire uz. Dans le cas d'un satellite 10 comportant un propulseur 40, d'orientation fixe telle que la direction de poussée dudit propulseur 40 est sensiblement orthogonale à la face -Z, celui-ci est également mis en œuvre pour la mise à poste du satellite 10. Le cas échéant, les propulseurs 30, 31 portés par les bras articulés 20, 21 et le propulseur 40 sont de préférence tous des propulseurs électriques, de sorte qu'une telle configuration permet une mise à poste tout électrique du satellite 10.

**Revendications**

1. Satellite (10) destiné à être mis à poste en orbite terrestre, comportant des moyens de propulsion (30, 31) comportant au moins un propulseur, et des moyens de déplacement (20, 21) desdits moyens de propulsion dans un repère satellite centré sur un centre de masse dudit satellite et comportant trois axes X, Y et Z tels que, dans le satellite à poste en orbite terrestre, l'axe X est parallèle à un vecteur vitesse du satellite, l'axe Z est dirigé vers la Terre, et l'axe Y est orthogonal aux axes X et Z, les moyens de déplacement étant adaptés à :

   - modifier des angles entre une direction de poussée de chaque propulseur et les axes respectivement X, Y du repère satellite,
   - déplacer chaque propulseur, à direction de poussée constante dans le repère satellite, de sorte à former un moment d'axe quelconque dans un plan orthogonal à ladite direction de poussée, les moyens de propulsion portés par les moyens de déplacement (20, 21) étant des moyens de propulsion électriques, **caractérisé en ce que** ledit satellite comporte des moyens de propulsion (40) électriques additionnels d'orientation fixe par rapport audit satellite.

2. Satellite (10) selon la revendication 1, **caractérisé en ce que** les moyens de déplacement sont agencés de part et d'autre du plan XZ formé par les axes X et Z du repère satellite, et de façon non symétrique par rapport audit plan XZ.

**3.** Satellite (10) selon l'une des revendications 1 à 2, **caractérisé en ce que** les moyens de déplacement comportent un bras articulé (20, 21) portant un propulseur (30, 31) des moyens de propulsion, ledit bras articulé comportant au moins trois articulations (22, 23, 24) comportant chacune au moins un degré de liberté en rotation autour d'un axe de rotation, les axes de rotation respectifs d'articulations adjacentes n'étant pas parallèles entre eux pour au moins deux paires d'articulations adjacentes.

**4.** Satellite (10) selon la revendication 3, **caractérisé en ce que** le bras articulé (20, 21) comporte une articulation additionnelle comportant au moins un degré de liberté en rotation autour d'un axe de rotation.

**5.** Satellite (10) selon l'une des revendications 1 à 4, **caractérisé en ce que** les moyens de propulsion (40) électriques additionnels sont agencés sur une face dite « -Z » d'un corps (11) dudit satellite (10), ladite face -Z se trouvant du côté opposé à la Terre dans le satellite à poste en orbite terrestre, de telle sorte que la direction de poussée desdits moyens de propulsion électrique additionnels est orthogonale à la face -Z.

**6.** Satellite (10) selon la revendication 5, **caractérisé en ce qu'**il comporte des moyens configurés pour commander, au cours d'une mise à poste du satellite en orbite terrestre :

- les moyens de déplacement (20, 21) et les moyens de propulsion (30, 31) portés par lesdits moyens de déplacement de sorte à ce que lesdits moyens de propulsion portés par lesdits moyens de déplacement forment une force de poussée de direction de poussée orthogonale à la face -Z,
- les moyens de propulsion (40) électriques additionnels de sorte à ce que lesdits moyens de propulsion électriques additionnels forment une force de poussée.

**Patentansprüche**

**1.** Satellit (10), welcher dazu bestimmt ist, in einer Erdumlaufbahn in Position gebracht zu werden, und Antriebsmittel (30, 31), die wenigstens ein Triebwerk umfassen, und Mittel zur Bewegung (20, 21) der Antriebsmittel in einem Satellitenkoordinatensystem umfasst, das auf den Massenmittelpunkt des Satelliten zentriert ist und drei solche Achsen X, Y und Z umfasst, dass bei dem in einer Erdumlaufbahn in Position befindlichen Satelliten die Achse X parallel zu einem Geschwindigkeitsvektor des Satelliten ist, die Achse Z zur Erde gerichtet ist und die Achse Y orthogonal zu den Achsen X und Z ist, wobei die Bewegungsmittel dafür eingerichtet sind:

- Winkel zwischen einer Schubrichtung jedes Triebwerks und den Achsen X bzw. Y des Satellitenkoordinatensystems zu ändern,
- jedes Triebwerk mit konstanter Schubrichtung im Satellitenkoordinatensystem zu bewegen, um so ein Moment mit beliebiger Achse in einer zu der Schubrichtung orthogonalen Ebene zu erzeugen, wobei die von den Bewegungsmitteln (20, 21) getragenen Antriebsmittel elektrische Antriebsmittel sind, **dadurch gekennzeichnet, dass** der Satellit zusätzliche elektrische Antriebsmittel (40) mit einer in Bezug auf den Satelliten festen Ausrichtung umfasst.

**2.** Satellit (10) nach Anspruch 1, **dadurch gekennzeichnet, dass** die Bewegungsmittel beiderseits der XZ-Ebene, die von den Achsen X und Z des Satellitenkoordinatensystems gebildet wird, und auf eine in Bezug auf die XZ-Ebene asymmetrische Weise angeordnet sind.

**3.** Satellit (10) nach einem der Ansprüche 1 bis 2, **dadurch gekennzeichnet, dass** die Bewegungsmittel einen Gelenkarm (20, 21) umfassen, der ein Triebwerk (30, 31) der Antriebsmittel trägt, wobei der Gelenkarm wenigstens drei Gelenke (22, 23, 24) umfasst, die jeweils wenigstens einen Freiheitsgrad der Rotation um eine Drehachse aufweisen, wobei die jeweiligen Drehachsen benachbarter Gelenke für wenigstens zwei Paare benachbarter Gelenke nicht parallel zueinander sind.

**4.** Satellit (10) nach Anspruch 3, **dadurch gekennzeichnet, dass** der Gelenkarm (20, 21) ein zusätzliches Gelenk umfasst, das wenigstens einen Freiheitsgrad der Rotation um eine Drehachse aufweist.

**5.** Satellit (10) nach einem der Ansprüche 1 bis 4, **dadurch gekennzeichnet, dass** die zusätzlichen elektrischen Antriebsmittel (40) auf einer mit "-Z" bezeichneten Seite eines Körpers (11) des Satelliten (10), wobei sich diese Seite -Z bei dem in einer Erdumlaufbahn in Position befindlichen Satelliten auf der von der Erde abgewandten Seite befindet, derart angeordnet sind, dass die Schubrichtung der zusätzlichen elektrischen Antriebsmittel orthogonal zu der Seite -Z ist.

6. Satellit (10) nach Anspruch 5, **dadurch gekennzeichnet, dass** er Mittel umfasst, die dafür ausgelegt sind, beim Inpositionbringen des Satelliten in einer Erdumlaufbahn:

- die Bewegungsmittel (20, 21) und die von den Bewegungsmitteln getragenen Antriebsmittel (30, 31) derart zu steuern, dass die von den Bewegungsmitteln getragenen Antriebsmittel eine Schubkraft mit einer zur Seite -Z orthogonalen Schubrichtung erzeugen,
- die zusätzlichen elektrischen Antriebsmittel (40) derart zu steuern, dass die zusätzlichen elektrischen Antriebsmittel eine Schubkraft erzeugen.

**Claims**

1. A satellite (10) intended to be stationed in terrestrial orbit, including propulsion means (30, 31) comprising at least one thruster, and means (20, 21) for moving said propulsion means in a satellite reference frame centered on a center of mass of said satellite and including three axes X, Y and Z such that, in the satellite stationed in terrestrial orbit, the X axis is parallel to a velocity vector of the satellite, the Z axis is directed towards the Earth, and the Y axis is orthogonal to the axes X and Z, the movement means being adapted to:

- modify angles between a thrust direction of each thruster and the axes X, Y respectively of the satellite reference frame,
- move each thruster, at a constant thrust direction in the satellite reference frame, so as to form a torque of any axis in a plane orthogonal to said thrust direction, the propulsion means carried by the movement means (20, 21) being electric propulsion means, **characterized in that** said satellite includes additional electric propulsion means (40) with a fixed orientation with respect to said satellite.

2. The satellite (10) according to claim 1, **characterized in that** the movement means are arranged on either side of the plane XZ formed by the axes X and Z of the satellite reference frame, and asymmetrically with respect to said plane XZ.

3. The satellite (10) according to any of claims 1 to 2, **characterized in that** the movement means include an articulated arm (20, 21) carrying a thruster (30, 31) of the propulsion means, said articulated arm including at least three articulations (22, 23, 24) each including at least one degree of freedom in rotation about an axis of rotation, the respective axes of rotation of adjacent articulations not being parallel to one another for at least two pairs of adjacent articulations.

4. The satellite (10) according to claim 3, **characterized in that** the articulated arm (20, 21) includes an additional articulation including at least one degree of freedom in rotation about an axis of rotation.

5. The satellite (10) according to any of claims 1 to 4, **characterized in that** the additional electric propulsion means (40) are arranged on a face referred to as « -Z » of a body (11) of said satellite (10), said -Z face lying on a side opposite to the Earth in the satellite stationed in terrestrial orbit, such that the thrust direction of said additional electric propulsion means is orthogonal to the face -Z.

6. The satellite (10) according to claim 5, **characterized in that** it includes means configured to control, during stationing of the satellite in terrestrial orbit:

- the movement means (20, 21) and the propulsion means (30, 31) carried by said movement means so that said propulsion means carried by said movement means form a thrust force with a thrust direction orthogonal to the -Z face,
- the additional electric propulsion means (40) so that said additional electric propulsion means form a thrust force.

**Fig.1**

**Fig.5**

**Fig.2**

**Fig.3**

**Fig.4**

## RÉFÉRENCES CITÉES DANS LA DESCRIPTION

**Documents brevets cités dans la description**

- EP 2660154 A2